Europäisches Patentamt

European Patent Office

Office européen des brevets

(11) Publication number: **0 180 598**
**B1**

(12) **EUROPEAN PATENT SPECIFICATION**

(45) Date of publication of patent specification: **08.08.90**

(21) Application number: **85901896.2**

(22) Date of filing: **05.04.85**

(86) International application number:
**PCT/US85/00602**

(87) International publication number:
**WO 85/04602 24.10.85 Gazette 85/23**

(51) Int. Cl.⁵: **B 05 D 5/10, B 32 B 3/10, B 32 B 7/06, B 32 B 7/14, B 32 B 7/10**

(54) **REMOVABLE LABELS.**

(30) Priority: **12.04.84 US 599628**
**26.03.85 US 716369**

(43) Date of publication of application:
**14.05.86 Bulletin 86/20**

(45) Publication of the grant of the patent:
**08.08.90 Bulletin 90/32**

(84) Designated Contracting States:
**AT BE CH DE FR IT LI LU NL SE**

(56) References cited:
**EP-A-0 149 135**
**DE-A-2 300 283**
**US-A-2 264 628**
**US-A-3 033 702**
**US-A-4 460 634**

(73) Proprietor: **AVERY INTERNATIONAL CORPORATION**
**P.O. Box 7090**
**Pasadena California 91109 (US)**

(72) Inventor: **NEWING, Charles, Wesley**
**421 East Live Oak**
**San Gabriel, CA 91776 (US)**
Inventor: **HSU, Tong, Chee**
**251 Puffton Village Apartments**
**Amherst, MA 01002 (US)**
Inventor: **LIN, Kenneth, Shou-Chein**
**16932 Septo Street**
**Sepulveda, CA 91343 (US)**

(74) Representative: **Holdcroft, James Gerald, Dr. et al**
**Graham Watt & Co. Riverhead**
**Sevenoaks Kent TN13 2BN (GB)**

Courier Press, Leamington Spa, England.

# EP 0 180 598 B1

## Description

Background of the invention

The printing of discontinuous patterns of adhesive is old in the art. Patents which may be mentioned are U.S. Patents 1,882,593; 2,191,704; 2,515,423; 2,822,290; 2,607,711; 3,311,489; 3,508,947; 3,268,357; 2,721,810; 3,505,497; 3,627,559; 3,940,868; 3,174,888; 3,741,786; and 3,857,931. Reasons for printing such adhesive patterns have varied widely.

Post-it™, a product manufactured and solid by 3M Company, has enjoyed success as a removable notepaper. As currently understood, Post-it® is constructed by applying on a primed side of a paper stock, adhesive microspheres, possibly prepared according to U.S. Patent 3,691,140 to Silver and/or U.S. Patent 4,166,152 to Baker, in a random fashion. This provides a surface which is coated with adhesive microspheres. The adhesive microspheres provide an array of peaks and valleys which in turn provide, in a microscopic sense, a generally random, discontinuous pattern. Examination has suggested the product to have an effective height differential of about 20 microns, with approximately 37 percent of the adhesive surface being available for contact with a smooth substrate. Contact is initiated at the peaks of adhesive microspheres.

It would be desirable to have greater flexibility in the construction of removable label stock to meet a wide variety of applications.

European Patent Specification No. 0149135 (considered under Art. 54(3) and (4) EPC) is relevant to the novelty of the present invention and discloses the use of microspheres of adhesive located on a sheet stock by means of screen or gravure printing. The European specification however gives no indication of the properties of the adhesive that are necessary to avoid the practical problems of, for example, paper picking, adhesive residue and adhesive cold flow.

It is therefore an object of the present invention to provide a removable label stock, in which the pattern of adhesive segments and the properties of the adhesive meet the practical requirements for use in a wide variety of applications.

Summary of the invention

According to the present invention, there is provided removable label stock comprising a plurality of discontinuous, adhesive segments in a pattern on at least a portion of at least one side of the carrier face stock and present in an amount to provide, in the zone bounded or defined by the adhesive, from about 10 percent to about 30 percent, preferably from about 15 percent to about 25 percent, of the adhesive present in the pattern, available for contact with a smooth substrate, such as stainless steel or glass, relative to the amount of adhesive which would have been present in the pattern if the adhesive were applied as a continuous film. To achieve this level for effective contact, from about 30 percent to about 75 percent of the zone which would have been occupied by the continuous film, is covered by adhesive segments. The segments have an average height of from about 15 to about 35 μm, preferably from about 20 to about 35 μm. The width of the segments is in the range from about 50 to about 400 μm, preferably from about 100 to about 300 μm.

Adhesive properties are critical to removability, and may be controlled by *in-situ* and/or post-polymerization crosslinking. Properties determined to be necessary are, that the adhesive have a room temperature storage modulus (G′) of from about $2\times10^5$ to about $1.5\times10^6$, preferably from about $3\times10^5$ to about $1.5\times10^6$ Pascal at a deformation rate of about $10^4$ radians/second; from about $4\times10^4$ to about $5\times10^5$, preferably about from about $5\times10^4$ to about $5\times10^5$ Pascal at a deformation rate of about $10^2$ radians/second; from about $1\times10^4$ to about $8\times10^4$, preferably from about $1\times10^4$ to about $6\times10^4$ Pascal at a deformation rate of about $10^{-2}$ radian/second; and from about $6\times10^3$ to about $7\times10^4$, preferably from about $6\times10^3$ to about $5\times10^4$ Pascal at a deformation rate of about $10^{-3}$ radian/second, as determined by ASTM D-4065-82, modified for soft matrices.

The adhesive is further characterised as providing a 180° peel strength on the stainless steel panel, having a roughness of $1.27\times10^{-6}$ cm (0.5 micro-inch), of from about 89.3 to 357.2 gm/cm (0.5 pound to about 2 pounds per inch), at a coating weight of 40 grams/meter². The effective average height of the adhesive segments at from at about 15 to 35 μm, is essential for broad-based application of a removable product, taking into account roughness of the carrier stock and substrate surface. Width of the adhesive segments is important to prevent fiber-picking of a paper substrate.

The adhesive employed further has a glass-transition temperature of less than about 250° Kelvin, preferably from about 200° to about 235° Kelvin. It may have a molecular weight of greater than two times the entanglement molecular-weight, preferably greater than about ten times the entanglement molecular-weight.

Although a wide variety of adhesives may be employed to construct removable stock, it is presently preferred to employ an acrylic-polymer adhesive printed from an emulsion by a gravure cylinder onto the fact stock. Acrylic adhesive will not stain paper nor vinyl substrates. Where the face material is paper, it is preferred that the solids content of the adhesive be at least 60 percent by weight and have a gel content of from about 65 percent to about 90 percent, preferably from about 70 percent to about 90 percent by weight, on a dry basis.

2

Brief description of the drawings

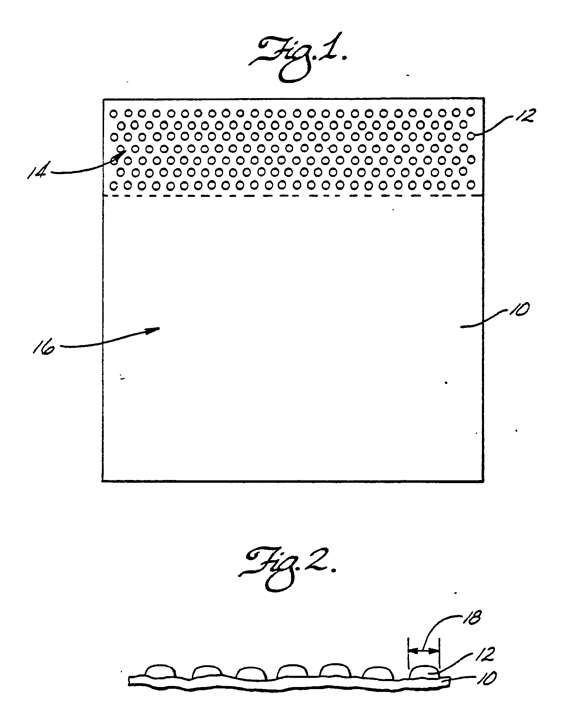

Attached Figs. 1 and 2 illustrate, in somewhat exaggerated terms, the generalized structure of notepaper having a discontinuous, removable adhesive gravure-printed thereon.

Detailed description

The present invention is directed to providing removable, pressure-sensitive-adhesive stock having adhesive segments containing thereon, as provided by gravure-printing, screen-printing, or the like.

With reference now to Figs. 1 and 2, the face stock 10 of a depicted notepaper has printed thereon an array of discontinuous adhesive segments 12 which occupy a portion, zone 14, of the total area (zone 14+zone 16) of the illustrated surface of the stock. In respect of zone 14, the amount of adhesive applied occupies from about 30 percent to about 75 percent of the area which would have been occupied by adhesive if the adhesive had been continuously coated over zone 14.

With particular reference to Fig. 2, only a portion of the applied adhesive may be available for contact with a substrate unless, through compression of the adhesive, the area of contact is increased. The area available for contact to a smooth surface, such as stainless steel or glass, by a portion of given segment 12, depicted as 18, is from about 10 percent to about 30 percent of the total area of zone 14, normally from about 15 percent to about 25 percent. The actual amount of contact area will vary depending upon the roughness or smoothness of the face stock and the roughness or smoothness of the substrate. As illustrated in Fig. 2, which microscopically depicts a paper surface, the valleys of the paper may preclude contact by making a segment inaccessible for contact. By contrast, more or less contact may occur with another rough surface, such contact due to nestling or a lack thereof. To account for wide variations in face stock and substrate, height of the adhesive segments employed should be, on the average, from about 15 to about 35 µm, preferably from about 20 to about 35 µm, more preferably, about 30 µm. Adhesives employed are emulsion adhesives. Acrylic polymers are preferred. By the term "acrylic polymer" there is meant homopolymers and, preferably, copolymers containing at least one unsaturated monomer such as acrylic acid, butylacrylate, 2-ethylhexylacrylate, methacrylic acid, isooctylacrylate and the like, for the formation of acrylic polymer systems. Acrylic polymer systems are preferred, as they do not stain paper nor vinyl. Rubber-based emulsion polymers and the like, having viscoelastic properties as recited herein, may also be used where staining is not critical. The net adhesive available on a substrate is characterized as having a glass-transition temperature of less than about 250° Kelvin, preferably from about 200° to about 235° Kelvin, and may have a molecular-weight greater than two times the entanglement molecular-weight, preferably at least ten times the entanglement molecular-weight. Gel, as induced by crosslinking, should be from about 65 percent to about 90 percent, preferably from about 70 percent to about 90 percent by weight, on a dry basis. Gel content is the amount of polymer insoluble in tetrahydrofuran.

While there is sufficient tenacity for the adhesive to remain on the face stock, to enable removability from the substrate the adhesive has a storage modulus (G') of from about $2 \times 10^5$ to about $1.5 \times 10^6$, preferably from about $3 \times 10^5$ to about $1.5 \times 10^6$ Pascal at a deformation rate of about $10^4$ radians/second; from about $4 \times 10^4$ to about $5 \times 10^5$, preferably from about $5 \times 10^4$ to about $5 \times 10^5$ Pascal at a deformation rate of about $10^2$ radians/second; from about $1 \times 10^4$ to about $8 \times 10^4$, preferably from about $1 \times 10^4$ to about $6 \times 10^4$ Pascal at a deformation rate of about $10^{-2}$ radian/second; and from about $6 \times 10^3$ to about $7 \times 10^4$, preferably from about $6 \times 10^3$ to about $5 \times 10^4$ Pascal at a deformation rate of about $10^{-3}$ radian/second, as determined by ASTM D-4065-82, modified for soft matrices.

The adhesive is further characterized as having a 180° peel, as determined by ASTM D-3330-81, from a stainless steel panel having a surface roughness of about $1.27 \times 10^{-6}$ cm (0.5 micro-inch), and from about 89.3 to 357.2 g/cm (0.5 pound to about 2 pounds per inch) when such adhesive is applied at a continuous-coating weight of 40 grams/meter$^2$, and may have 50.8 µm (2-mil) mylar as the face stock.

As indicated, the adhesive is printed from an emulsion normally containing particles of about one micron or less in diameter which, upon evaporation of water from the emulsion, coalesce to form adhesive segments having an average height of from about 15 to about 35 µm, preferably from about 20 to about 35 µm. Running together of the applied adhesive is to be avoided at all times, as performance in this instance is likely the most inferior because of loss of effective height of the formed adhesive to substantially less than 15 µm.

Table I, below, shows the general composition and properties of the preferred adhesives for use in the practice of the instance invention.

EP 0 180 598 B1

TABLE I

| | Adhesive A | Adhesive B |
|---|---|---|
| 180° Peel (lb/in) (40 g/m$^2$) | 1.0 | 0.99 |
| Glass transition temperature, Tg | 213°K | 203°K |

| Deformation rate, radians/second | Storage modulus at about 25°C (G') Pascal (N/m$^2$) | |
|---|---|---|
| $10^{+4}$ | $4.5 \times 10^5$ | $1.0 \times 10^6$ |
| $10^{+2}$ | $9.0 \times 10^4$ | $1.7 \times 10^5$ |
| $10^{-2}$ | $1.1 \times 10^4$ | $2.4 \times 10^4$ |
| $10^{-3}$ | $9.0 \times 10^3$ | $1.4 \times 10^4$ |

Adhesive A contains about 60 percent by weight 2-ethylhexylacrylate, about 38 percent by weight butylacrylate, and about 2 percent by weight methacrylic acid, crosslinked with about 0.385 percent by weight CX-100, an aziridine crosslinker, and about 1.15 percent by weight dioctylphthalate. Gel content is from about 70 percent to 80 percent.

Adhesive B contains about 93.5 percent by weight 2-ethylhexylacrylate, about 5 percent by weight acrylic acid, and about 1.5 percent by weight hexanedioldiacrylate as the crosslinker.

In creating an adhesive of the required characteristics, crosslinking is employed only to the extent necessary to reduce the aggressiveness of the adhesive. Crosslinking may occur *in situ* during polymerization or prior to or after printing of the adhesive on the face stock.

Adhesive segments applied to the face stock are, indeed, microscopic, and the invention will now be described in detail by means of the producing removable adhesive stock in accordance with the instant invention.

It is presently preferred to use gravure-printing from a gravure cylinder having cells of an effective mean diameter of from about 100 to about 400 μm, preferably from about 150 to about 300 μm, more preferably from about 200 to about 300 μm; with a cell depth ranging from about 25 to about 70 μm, preferably from about 50 to about 70 μm; generally spaced from each other by a distance of up to about 200 μm; and containing from about 20 to 47 cells/cm (50 to about 120 cells/inch), the number of cells provided being inversely proportional to cell diameter. Again, the cells are to enable coating of from about 30 percent to about 75 percent of the area of the face stock which would otherwise be continuously coated with the adhesive. Effective coating weight ranges from about 3 to about 10 grams/m$^2$, preferably from about 4 to about 7 grams/m$^2$.

Because of the microscopic nature of the cells, contained emulsion is removed by capillary action. Removal is incomplete, leading to printing of segments of irregular shape. At their maximum width, the segments will range from about 50 to about 400 μm, preferably from about 100 to about 300 μm. The lower limit specified is that necessary for contact. The upper limit specified is that necessary to avoid paper-pick, i.e., picking of paper fibers from a paper substrate.

Face stock to which adhesive can be applied may range widely, depending upon the end-use application: from a smooth surface, such as mylar; a semi-smooth surface, such as metal film or primed or coated paper; or a rough surface, such as unprimed paper. When the face stock is paper, the area that is to be printed with the adhesive may be primed with a primer, such as a composition formed of about 80 percent by weight zinc oxide and about 20 percent by weight polymethylmethacrylate, to retard moisture penetration. Corona-treating the paper and/or pre-wetting the paper can also be used to enhance adhesive printing. These procedures enable tenacious adhesion to the paper, as water leaves the emulsion to form the adhesive segments. Where corona-treating is used, an effective corona can be generated at voltages of about 350 volts or more and at currents of 7 amps or more, for paper moving at web speed of from 30.5 to 53 meters/minute (100 to 175 feet per minute). In addition, transfer of emulsion to substrate may be eased by creating an electrostatic differential between the cylinder and the substrate.

It is presently preferred to print on uncoated paper with an acrylic emulsion having a solids content of at least about 60 percent, the acrylic polymer having a gel content of from about 70 percent to about 90 percent by weight, on a dry basis.

Products produced in accordance with the instant invention, and depending upon the nature of the emulsion adhesive employed and the stock to which it is applied, can be used for a variety of applications. In addition to notepaper and removable tape for conventional office use, they may be employed as temporary bumper stickers, as temporary identification tags, and for a wide variety of commercial applications.

4

While nowise limiting, the following is an example of removable stock prepared in accordance with the instant invention.

## Example

There was processed, canary yellow paper of a weight of 50 pounds per ream, a caliper of 4 mils, a Sheffield Smoothness Test of 250 T/W, Gurley Porosity of 15, Cobb Size of 22.3, and an ash content of from 10 to 12 percent. The paper was passed as a web speed of 53 meters (175 feet) per minute through a corona formed at 350 volts and 10 amps. An emulsion of Adhesive A was printed from a gravure cylinder 29.2 cm (11.5 inches) in diameter, with 50 percent of the surface covered with cells of 250 μm in diameter and havivg a depth of 50 μm. There was formed on the paper a band approximately 17 mm wide. A pad was formed from layers of adhesive-coated paper. Following are the forces required to remove the adhesive from certain substrates by peeling across the substrate:

### TABLE II

| Substrate | Adhesion, gram-force/sheet |
|---|---|
| Xerox® bond | 46 |
| Unprinted magazine paper | 72 |
| Typing bond | 21 |
| Rough vinyl | 15 |
| Smooth vinyl | 41 |

## Control

A sample removable note paper was prepared by applying through a 120-mesh screen, an emulsion of a polymer containing about 62 parts by weight 2-ethylhexyl acrylate, 18 parts by weight methyl methacrylate, 5 parts by weight acrylic acid, and 15 parts by weight dibutyl fumarate, onto 60-pound Kromekote paper, made by Champion International. There were formed adhesive segments having an average width of about 100 μm and an average height of about 15 μm. The adhesive of the segments had a gel content of about 58 percent. The rheological properties are shown in Table III.

### TABLE III

| Deformation rate, radians/second | Storage modulus at about 25°C Pascal (N/m²) |
|---|---|
| $10^4$ | $2.2 \times 10^6$ |
| $10^2$ | $2.1 \times 10^5$ |
| $10^{-2}$ | $7.5 \times 10^3$ |
| $10^{-3}$ | $4 \times 10^3$ |

When the product was applied to stainless steel, with a dwell time of 20 minutes, there resulted 90° peel from the stainless steel at a peel speed of 762 cm (300 inches) per minute, which gave paper tear. The product was unsuitable as a removable label.

## Adhesive criteria

The emulsion adhesives of the Example and the Control were applied through 40-, 60- and 80-mesh screens to the paper of the Example, to provide adhesive segments of respective average widths of 390, 310, and 250 μm. Samples of the construction were applied to a legal pad known as Padmaster, manufactured and sold by Bradner Central Co., of Chicago, Illinois. Performance at different rates of peel is shown in Table IV.

# EP 0 180 598 B1

## TABLE IV

| Adhesive width | Rate of peel (cm/min (in/min) | | Adhesive | |
|---|---|---|---|---|
| | | | Example | Control |
| 390 | 762 | (300) | paper pick | paper tear |
| 390 | 223 | (88) | clean removal | paper tear |
| 310 | 762 | (300) | slight paper pick | paper tear |
| 310 | 223 | (88) | clean removal | paper tear |
| 250 | 762 | (300) | clean removal | paper pick |
| 250 | 223 | (88) | clean removal | slight paper pick |

The above Table establishes the importance of segment width and adhesive selection to proper label performance.

A rate of peel of 762 cm (300 inches) per minute is the highest rate that could be anticipated for normal use of the product. The most frequent rate of peel would be in the order of from about 190 to 380 cm (75 to about 150 inches) per minute.

## Claims

1. A removable label stock (10) comprising a plurality of discontinuous adhesive segments (12) on at least a portion or zone (14) of at least one side of a face stock and occupying from 30 to 75 percent of said zone with an average height relative to the surface of the face stock of from 15 to 35 μm, characterised in that the adhesive segments are present in an amount to provide from 10 to 30 percent of the adhesive available for contact with a smooth substrate in the zone (14) formed by the adhesive segments relative to the amount of adhesive which would have occupied said zone were said zone continuously coated with said adhesive, and have a maximum width of from 50 to 400 μm, said adhesive having a room-temperature storage modulus (G') of from $2\times10^5$ to $1.5\times10^6$ Pascal at a deformation rate of $10^4$ radians per second, a room-temperature storage modulus of from $4\times10^4$ to $5\times10^5$ Pascal at a deformation rate of $10^2$ radians per second, a room-temperature storage modulus of from $1\times10^4$ to $8\times10^4$ Pascal at a deformation rate of $10^{-2}$ radian per second, and a room-temperature storage modulus of from $6\times10^3$ to $7\times10^4$ Pascal at a deformation rate of $10^{-3}$ radian per second; a 180° peel strength on a stainless steel panel, having a roughness of $1.27\times10^{-6}$ cm (0.5 micro-inch), of from 89.3 to 357.2 gm/cm (0.5 pounds to 2 pounds per inch) at a coating weight of 40 grams/m²; and a glass transition temperature of less than 250° Kelvin.

2. A removable label stock as claimed in claim 1, characterised in that the glass transition temperature is between 200 and 235° Kelvin.

3. A removal label stock as claimed in claim 1 or claim 2, characterised in that the adhesive segments (12) have a room-temperature storage modulus of from $3\times10^5$ to $1.5\times10^6$ Pascal at a deformation rate of $10^4$ radians per second, a room-temperature storage modulus of from $5\times10^4$ to $5\times10^5$ Pascal at a deformation rate of $10^2$ radians per second, a room-temperature storage modulus of from $1\times10^4$ to $6\times10^4$ Pascal at a deformation rate of $10^{-2}$ radian per second, and a room-temperature storage modulus of from $6\times10^3$ to $5\times10^4$ Pascal at a deformation rate of $10^{-3}$ radian per second.

4. A removable label stock as claimed in any preceding claim, characterised in that the adhesive segments (12) have a maximum width of from 200 to 300 μm.

5. A removable label stock as claimed in any preceding claim, characterised in that the adhesive segments (12) are emulsion adhesive segments.

6. A removable lable stock as claimed in any preceding claim, characterised in that the adhesive is

(a) formed of an acrylic polymer containing an interpolymerized amount of at least one monomer selected from the group consisting of acrylic acid, butylacrylate, 2-ethylhexyl acrylate, methacrylic acid, and isooctyl acrylate; or

(b) an acrylic polymer comprising, based on the weight of the monomers, 60 percent by weight 2-ethylhexyl acrylate, 38 percent by weight butyl acrylate, and 2 percent by weight methacrylic acid, crosslinked to a gel content of from 65 percent to 90 percent by weight, on a dry basis.

7. A removable label stock as claimed in any preceding claim, characterised in that the adhesive segments (12) provide contact to a smooth substrate of from 15 percent to 25 percent of the zone (14) of the label stock in which the adhesive segments are contained.

8. A removable label stock as claimed in any preceding claim, characterised in that the adhesive segments were applied by gravure printing.

6

**Patentansprüche**

1. Ablösbares Zettelmaterial (10), bestehend aus einer Mehrzahl unterbrochener Klebstoffteile (12) auf zumindest einem Bereich oder einer Zone (14) zumindest einer Seite eines Klebflächenmaterials, die 30 bis 75% der Zone mit einer Durchschnittshöhe in bezug auf die Oberfläche des Klebflächenmaterials von 15 bis 35 μm einnehmen, dadurch gekennzeichnet, daß die Klebstoffteile in einer solchen Menge vorhanden sind, daß 10 bis 30% des Klebstoffs für einen Kontakt mit einer glatten Unterlage in der von den Klebstoffteilen gebildeten Zone (14) bezogen auf die Klebstoffmenge zur Verfügung stehen, die diese Zone eingenommen hätte, wäre die Zone ununterbrochen mit dem Klebstoff beschichtet, sowie eine maximale Breite von 50 bis 400 μm aufweisen und der Klebstoff einen Raumtemperatur-Lagerungsmodul (G') von $2\times10^5$ bis $1,5\times10^6$ Pascal bei einer Formveränderungsrate von $10^4$ rad/s, einen Raumtemperatur-Lagerungsmodul von $4\times10^4$ bis $5\times10^5$ Pascal bei einer Formveränderungsrate von $10^2$ rad/s, einen Raumtemperatur-Lagerungsmodul von $1\times10^4$ bis $8\times10^4$ Pascal bei einer Formveränderungsrate von $10^{-2}$ rad/s und einen Raumteperatur-Lagerungsmodul von $6\times10^3$ bis $7\times10^4$ Pascal bei einer Formveränderungsrate von $10^{-3}$ rad/s, eine 180°-Abschälfestigkeit auf einer nichtrostenden Stahlplatte mit einer Rauhigkeit von $1,27\times10^{-6}$ cm (0,5 Mikrozoll) von 89,3 bis 357,2 gm/cm (0,5 Pfund bis 2 Pfund pro Zoll) bei einem Beschichtungsgewicht von 40 Gramm/m² und eine Glasübergangstemperatur von weniger als 250° Kelvin aufweist.

2. Ablösbares Zettelmaterial nach Anspruch 1, dadurch gekennzeichnet, daß die Glasübergangstemperatur zwischen 200 und 235° Kelvin liegt.

3. Ablösbares Zettelmaterial nach Anspruch 1 oder Anspruch 2, dadurch gekennzeichnet, daß die Klebstoffteile (12) einen Raumtemperatur-Lagerungsmodul von $3\times10^5$ bis $1,5\times10^6$ Pascal bei einer Formveränderungsrate von $10^4$ rad/s, einen Raumtemperatur-Lagerungsmodul von $5\times10^4$ bis $5\times10^5$ Pascal bei einer Formveränderungsrate von $10^2$ rad/s, einen Raumtemperatur-Lagerungsmodul von $1\times10^4$ bis $6\times10^4$ Pascal bei einer Formveränderungsrate von $10^{-2}$ rad/s und einen Raumtemperatur-Lagerungsmodul von $6\times10^3$ bis $5\times10^4$ Pascal bei einer Formveränderungsrate von $10^{-3}$ rad/s aufweisen.

4. Ablösbares Zettelmaterial nach einem beliebigen vorhergehenden Anspruch, dadurch gekennzeichnet, daß die Klebstoffteile (12) eine maximale Breite von 200 bis 300 μm aufweisen.

5. Ablösbares Zettelmaterial nach einem beliebigen vorhergehenden Anspruch, dadurch gekennzeichnet, daß die Klebstoffteile (12) Emulsionsklebstoffteile sind.

6. Ablösbares Zettelmaterial nach einem beliebigen vorhergehenden Anspruch, dadurch gekennzeichnet, daß der Klebstoff

a) von einem Acrylpolymeren mit einem interpolymerisierten Betrag von zumindest einem Monomeren aus der Gruppe Acrylsäure, Butylacrylat, 2-Ethylhexylacrylat, Methacrylsäure und Isooctylacrylat oder

b) von einem Acrylpolymeren gebildet ist, das, auf der Basis des Gewichts der Monomeren, 60 Gewichtsprozent 2-Ethylhexylacrylat, 38 Gewichtsprozent Butylacrylat und 2 Gewichtsprozent Methacrylsäure, vernetzt mit einem Gelgehalt von 65 Gewichtsprozent bis 90 Gewichtsprozent auf der Bezugsbasis der Trockenmasse umfaßt.

7. Ablösbares Zettelmaterial nach einem beliebigen vorhergehenden Anspruch, dadurch gekennzeichnet, daß die Klebstoffteile (12) einen Kontakt mit einer glatten Unterlage von 15% bis 25% der Zone (14) des Zettelmaterials herstellen, in der die Klebstoffteile enthalten sind.

8. Ablösbares Zettelmaterial nach einem beliebigen vorhergehenden Anspruch, dadurch gekennzeichnet, daß die Klebstoffteile nach dem Tiefdruckverfahren aufgetragen wurden.

**Revendications**

1. Feuille-support (10) d'étiquettes détachables comprenant un ensemble des parties adhésives (12) discontinues sur au moins une partie ou zone (14) d'au moins une face de feuille-support et occupant à 30 à 75% de ladite zone avec une hauteur moyenne par rapport à la surface de ladite face de feuille-support de 15 à 35 μm caractérisée en ce que les parties adhésives sont en quantité telle que 10 à 30% de l'adhésif disponible soient en contact avec un substrat lisse dans la zone (14), pourcentages constitués par les parties adhésives par rapport à la quantité d'adhésif qui aurait occupé ladite zone si cette dite zone aurait été recouverte de façon continue à l'aide dudit adhésif, lesdites parties adhésives ayant une largeur maximale de 50 à 400 μm, ledit adhésif ayant un module d'élasticité (G') en stockage à température ambiante de $2\times10^5$ à $1,5\times10^6$ Pa à une vitesse de déformation de $10^4$ radian par seconde, un module d'élasticité en stockage à température ambiante de $4\times10^4$ à $5\times10^5$ Pa à une vitesse de déformation de $10^2$ radians par seconde, un module d'élasticité en stockage à température ambiante de $1\times10^4$ à $8\times10^4$ Pa à une vitesse de déformation de $10^{-2}$ radians par seconde, et un module d'élasticité en stockage à température ambiante de $6\times10^3$ à $7\times10^4$ Pa à une vitesse de déformation de $10^{-3}$ radians par seconde; une force d'arrachement à 180° sur plaque d'acier inoxydable, ayant une rugosité de $1,27\times10^{-6}$ (0,5 micropouce), de 89,3 à 357,2 g/cm (0,5 à 2 livres par pouche) pour un poids de revêtement de 40 g/m²; et une température de transition vitreuse inférieure à 250°K.

2. Feuille support d'étiquettes détachables telle que revendiquée à la revendication 1, caractérisée en ce que pour la température de transition vitreuse est entre 200 et 235°.

3. Feuille support d'étiquettes détachables telle que revendiquée à la revendication 1 ou à la revendication 2, caractérisée en ce que les parties adhésives (12) ont un module d'élasticité en stockage à température ambiante de $3\times10^5$ à $1,5 \cdot 10^6$ Pa pour une vitesse de déformation de $10^4$ radians par seconde, un module d'élasticité en stockage à température ambiante de $5\times10^4$ à $5\times10^5$ Pa pour une déformation de $10^2$ radians par seconde, un module d'élasticité en stockage à température ambiante de $1\times10^4$ à $6\times10^4$ Pa pour une déformation de $10^{-2}$ radians par seconde et un module d'élasticité en stockage à température ambiante de $6\times10^3$ à $5\times10^4$ Pa pour une déformation de $10^{-3}$ radians par seconde.

4. Feuille support d'étiquettes détachables telle que revendiquée dans l'une quelconques des revendications précédentes, caractérisée en ce que les parties adhésives (12) ont une largeur maximale de 200 à 300 µm.

5. Feuille support d'étiquettes détachables telle que revendiquée dans l'une quelconques des revendications précédentes, caractérisée en ce que les parties adhésives (12) sont des parties à adhésif en émulsion.

6. Feuille support d'étiquettes détachables telle que revendiquée dans une revendication 4 caractérisée en ce que l'adhésif est constitué.

a) d'un polymère acrylique contenant une quantité interpolymérisée d'au moins un monomère choisi dans le groupe consistant en l'acide acrylique, l'acrylate de butyle, l'acrylate de 2-éthylhexyle, l'acide méthacrylique et l'acrylate d'isooctyle; ou

b) d'un polymère acrylique comprenant, basés sur le poids des monomères, 60% en poids d'acrylate d'éthylhexyl, 38% en poids d'acrylate de butyle, et 2% en poids d'acide méthacrylique, réticulés à une teneur en gel de 65% à 90% en poids, calculée en matières sèches.

7. Feuille support telle que revendiquée dans l'une quelconque des revendications précédentes, caractérisée en ce que les parties adhésives (12) fournissent le contact avec un substrat lisse de 15% à 25% de la zone (14) de la feuille support d'étiquettes, dans laquelle sont incluses les zones adhésives.

8. Feuille support telle que revendiquée dans l'une quelconque des revendications précédentes, caractérisé en ce que les parties adhésives sont appliquées par impression par gravure.

*Fig.1.*

*Fig.2.*